# EUROPÄISCHE PATENTSCHRIFT

(11) **EP 2 404 685 B1**
(45) Veröffentlichungstag und Bekanntmachung des Hinweises auf die Patenterteilung: **31.07.2013**
(21) Anmeldenummer: 11005346.9
(22) Anmeldetag: 30.06.2011
(51) Int. Cl.: B21D 53/04, F24J 2/24, B21D 24/00, B21D 35/00

(54) **Verfahren zur Herstellung von Solarkollektoren, insbesondere von Absorbern für Flachsonnenkollektoren**
Method for producing solar collectors, in particular absorbers for flat solar collectors
Procédé de fabrication de collecteurs solaires, notamment d'absorbeurs pour collecteurs solaires plats

(30) Priorität: 06.07.2010 DE 102010026307; 29.06.2011 DE 102011105940
(43) Veröffentlichungstag der Anmeldung: 11.01.2012
(73) Patentinhaber: Gräbener Pressensysteme GmbH & Co. KG, D-57250 Netphen (DE)
(72) Erfinder: Gräbener Thomas, Dr., 57290 Neunkirchen-Struthütten (DE); Horn, Ulrich, 57072 Siegen (DE)
(74) Vertreter: Grosse, Wolf-Dietrich Rüdiger

(56) Entgegenhaltungen:
- EP-A1- 0 110 311
- EP-A1- 0 776 711
- EP-A2- 0 726 104
- WO-A1-97/45217
- US-A- 3 442 001

## Beschreibung

Die Erfindung betrifft ein Verfahren zur Herstellung von Solarkollektoren, insbesondere von Absorbern für Flachsonnenkollektoren, wobei der Solarkollektor einen plattenartig ausgebildeten Grundkörper umfasst, in den mindestens ein Flüssigkeitskanal für ein Fluid eingebracht ist, durch den von der Sonne aufzuheizendes Fluid geführt werden kann.

Bei einem aus der DE 197 11 324 C1 bekannten Absorber für einen Flachsonnen- bzw. -solarkollektor erstreckt sich an der Unterseite des plattenartigen Absorbers, ausgeführt beispielsweise als aus Aluminium tiefgezogene, profilierte Kollektorwanne, über die Fläche hinweg eine mit diesem verbundene mäanderförmige Rohrleitung für ein flüssiges Wärmetransportmedium.

Anstelle von verschiedenen bekannten anderen Arten zur Ausbildung und Verbindung der Rohrstränge mit der plattenartigen Kollektorwanne, wird dort die mäanderförmige Rohrleitung nur außerhalb der Mäanderbögen mit einer mehrere Mäanderwindungen überdeckenden Platte des Absorbers durch Ultraschallschweißung verbunden.

Eine weitere Absorber-Herstellungstechnik sieht vor, dass ein dünnwandiges Aluminiumblech mit einer speziell geformten Rille versehen und nach einer selektiven Beschichtung ein Wärmeträgerrohr in die Rille eingelegt und unter hohem Druck verpresst wird.

Auf einen solchermaßen vorgefertigten Grundkörper wird dann mit Abdichtung ein Einscheiben-Sicherheits-Glattglas befestigt, vorzugsweise durch Kleben. Nach der Montage der fertigen Sonnen- bzw. Solarkollektoren, insbesondere auf einer Dach-Unterkonstruktion, wandeln diese das einfallende Sonnenlicht in Wärme um und geben diese an ein frostsicheres, durch den Kollektor zirkulierendes GlykolWasser-Gemisch ab. Die aufgeheizte Wärmeträgerflüssigkeit fließt einem an Heißwasser-Verbrauchern und/oder an eine Heizungsanlage angeschlossenen Warmwasserspeicher bzw. Pufferspeicher zu.

Die EP 0 110 311 A1 beschreibt eine Flachwärmetauscherplatte und ein Verfahren zu deren Herstellung. Die Flachwärmetauscherplatte ist aus zwei aufeinander liegenden Platten zusammengesetzt, zwischen denen Kanäle für ein zu erwärmendes oder abzukühlendes Medium vorgesehen sind. Die beiden Platten bestehen aus einem nicht plattierbaren Metall. Zwischen diesen beiden Platten liegt eine Haftschicht aus einem amorphen Metall, welche eine Verbindung der Platten durch Kaltwalzplattieren ermöglicht. Jede der Platten trägt eine aufplattierte Deckschicht aus einem gegen aggressive und / oder korrosive Medien beständigen Metall.

Nachteilig ist bei den vorbekannten Verfahren zur Herstellung von Solarkollektoren, insbesondere von Absorbern für Flachsonnenkollektoren, dass der Herstellungsaufwand erheblich ist. Fertigungsungenauigkeiten führen auch zu Qualitätseinbußen, die sich negativ auf den Wirkungsgrad der Kollektoren auswirken.

Der Erfindung liegt daher die Aufgabe zugrunde, ein Verfahren der eingangs genannten Art so fortzubilden, dass der Herstellungsaufwand bei der Produktion eines Solarkollektors, insbesondere eines Absorbers eines Flachsonnenkollektors, vermindert werden kann, so dass eine preiswertere Fertigung möglich ist. Weiterhin soll die Qualität des Solarabsorbers und somit der Flachsonnenkollektoren verbessert werden.

Diese Aufgabe wird erfindungsgemäß dadurch gelöst, dass der Grundkörper des Solarabsorbers samt dem mindestens einen Flüssigkeitskanal durch die Schritte hergestellt wird:
a) Zuführen eines bandförmigen Ausgangsmaterials in den Werkzeugbereich einer Umformmaschine;
b) Durchführen eines Umformprozesses mit dem Ausgangsmaterial, bei dem durch einen Press-, Präge- und/oder Tiefziehvorgang zumindest ein Teil des Flüssigkeitskanals in das bandförmige Ausgangsmaterial eingeformt wird.

Das bandförmige Ausgangsmaterial wird dabei erfindungsgemäβ während der Durchführung des Press-, Präge- und/oder Tiefziehvorgang zwischen mindestens zwei Werkzeugteilen an mindestens zwei voneinander beabstandete Stellen kraft- und/oder formschlüssig fixiert bzw. gehalten. Dabei ist erfindungsgemäβ vorgesehen, dass das Fixieren oder Halten in einem in Zuführrichtung des bandförmigen Ausgangsmaterials vorneliegenden Bereich während der Durchführung des Press-, Präge- und/oder Tiefziehvorgang zwischen mindestens zwei Werkzeugteilen formschlüssig erfolgt, indem ein Fixier- oder Haltebereich in den bereits gepressten, geprägten bzw. tiefgezogenen Abschnitt des Flüssigkeitskanals eingreift.

Die Umformmaschine kann dabei mindestens ein erstes Werkzeugteil und mindestens ein zweites Werkzeugsteil aufweisen, wobei jedes Werkzeugteil betätigt wird, um in separaten Teil-Umformprozessen jeweils einen Teil des Flüssigkeitskanals herzustellen, und wobei die Teile des Flüssigkeitskanals sich komplementär ergänzen. Hierbei sieht eine Fortbildung vor, dass das erste Werkzeugteil einen Teil eines noch nicht kompletten mäanderförmigen Abschnitts des Flüssigkeitskanals herstellt und dass das zweite Werkzeugteil diesen mäanderförmigen Abschnitt komplettiert.

Eine andere Ausgestaltung sieht vor, dass die Umformmaschine mindestens ein erstes Werkzeugteil aufweist, wobei das Werkzeugteil betätigt wird, um in separaten Teil-Umformprozessen jeweils einen Teil des mindestens einen Flüssigkeitskanals herzustellen. Dabei ist insbesondere vorgesehen, dass die Einformung von sich in Zuführrichtung anschließenden Abschnitten des mindestens einen Flüssigkeitskanals durch Wiederholung des Betätigens des ersten Werkzeugteils erfolgt, wobei zwischen zwei Betätigungen das bandförmige Ausgangsmaterial in Zuführrichtung um einen definierten Weg verschoben wird. Dabei ist der Verschiebeweg des bandförmigen Ausgangsmaterials vorzugsweise geringer als die Breite des ersten Werkzeugteils in Zuführrichtung gemessen, um bei der Ausbildung des Flüssigkeitskanals sich vom Werkzeugteil überlappende Bereiche zu schaffen.

Die Umformmaschine kann des weiteren mindestens ein drittes Werkzeugteil aufweisen, wobei dieses dritte Werkzeugteil betätigt wird, um in einem weiteren separaten Teil-Umformprozess mindestens einen Anschlussabschnitt an den mindestens einen noch nicht kompletten Flüssigkeitskanal anzuformen.

Schließlich kann vorgesehen werden, dass nach der Einbringung des gesamten Flüssigkeitskanals das bandförmige Ausgangsmaterial mittels einer Trennschere oder dergleichen Trennmittel auf eine definierte Länge abgelängt wird.

Der Herstellungsaufwand und die Qualität von Solarabsorbern sowie damit einhergehend von Flachsonnenkollektoren werden also entscheidend verringert bzw. verbessert, wenn aus einem metallischen Werkstoff, vorzugsweise aus Stahlband, auf einer mechanischen Umformmaschine, vorzugsweise einer Presse mit einem unter dem Pressentisch angeordneten Kniehebel- bzw. Doppelkniehebelsystem, der wannenartige Grundkörper sogleich schon mit den Flüssigkeitskanälen insbesondere durch Prägen hergestellt wird, wobei der als Band taktweise in das Folgeverbundwerkzeug der Presse zugeführte metallische Werkstoff, insbesondere von einem Coil abgewickeltes Stahlband, während der Umformung stets an mindestens zwei voneinander beabstandeten Stellen durch Halten des metallischen Bandes fixiert wird.

Diese Haltefunktion wirkt stets, in Bandzuführrichtung gesehen, vorne an der Eintrittsseite des Folgeverbundwerkzeugs voreilend flächig auf das Metallband und hinter der Prägestelle nacheilend formschlüssig auf die bereits fertig geprägte Form. Damit wird einerseits erreicht, dass sich beim Umformen bzw. Prägen keine Falten ausbilden können und das Material nur im Bereich der Sicken fließt, wodurch sich andererseits gleichzeitig eine Materialersparnis ergibt.

Die durch eine SPS-Steuerung mit Bedienerführung und Programmvorwahl gesteuerte Umformanlage, insbesondere Kniehebelpresse, erlaubt eine hohe Flexibilität, bei hohen Hubzahlen (bis zu 85 Hübe/min) große Stückzahlen mit Kollektorlängen im Raster von 100 mm bis 3.000 mm, ohne dass bei Längenänderungen ein Werkzeugumbau erforderlich ist.

In den Figuren sind Ausführungsbeispiele der Erfindung dargestellt. Es zeigen:

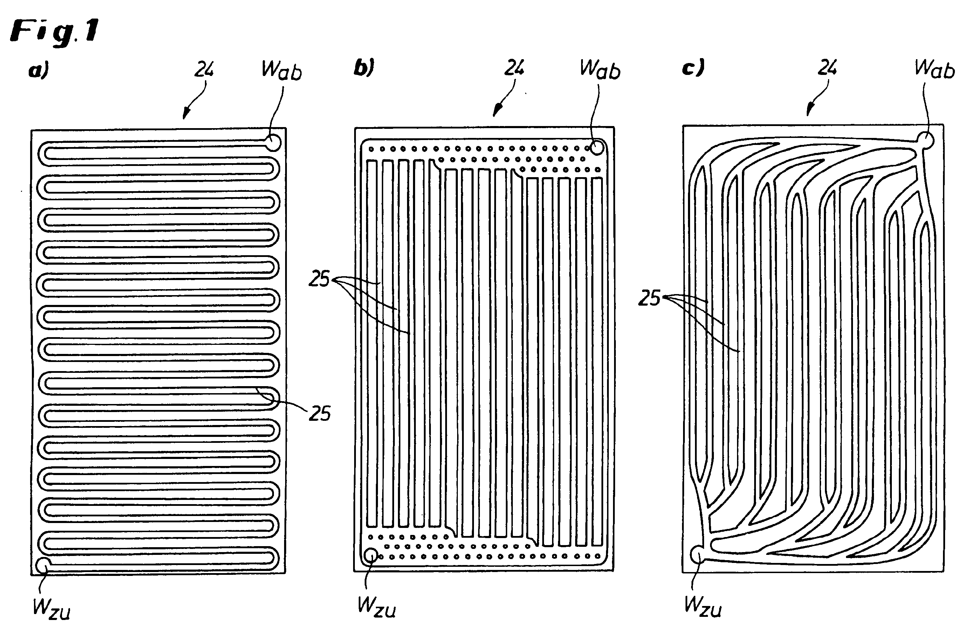

- Fig.1a: die Draufsicht auf einen Solarabsorber-Grundkörper mit einem mäanderförmigen Verlauf der Flüssigkeitskanäle;
- Fig. 1 b: die Draufsicht auf einen Solarabsorber-Grundkörper mit einem harfenförmigen Verlauf der Flüssigkeitskanäle;
- Fig. 1 c: die Draufsicht auf einen Solarabsorber-Grundkörper mit einem fraktalen Verlauf der Flüssigkeitskanäle;
- Fig. 2a: die Draufsicht auf einen zu Fig. 1 a hinsichtlich des Anschlusses der Flüssigkeitskanäle alternativen Solarabsorber-Grundkörper;

- Fig. 2b: die Draufsicht auf einen zu Fig. 1b hinsichtlich des Anschlusses der Flüssigkeitskanäle alternativen Solarabsorber-Grundkörper;
- Fig. 2c: die Draufsicht auf einen zu Fig. 1c hinsichtlich des Anschlusses der Flüssigkeitskanäle alternativen Solarabsorber-Grundkörper;
- Fig. 3: die Seitenansicht einer Werkzeuganordnung zur Herstellung des Solarabsorber-Grundkörpers, die Bestandteil einer als Kniehebelpresse ausgebildeten Umformmaschine ist;
- Fig. 4: schematisch die Vorgehensweise bei der Fertigung eines Solarabsorber-Grundkörpers mit mäanderförmigem Verlauf des Flüssigkeitskanals;
- Fig. 5: schematisch die Vorgehensweise bei der Fertigung eines Solarabsorber-Grundkörpers mit harfenförmigem Verlauf der Flüssigkeitskanäle; und
- Fig. 6: schematisch die Vorgehensweise bei der Fertigung eines Solarabsorber-Grundkörpers mit fraktalem Verlauf der Flüssigkeitskanäle.

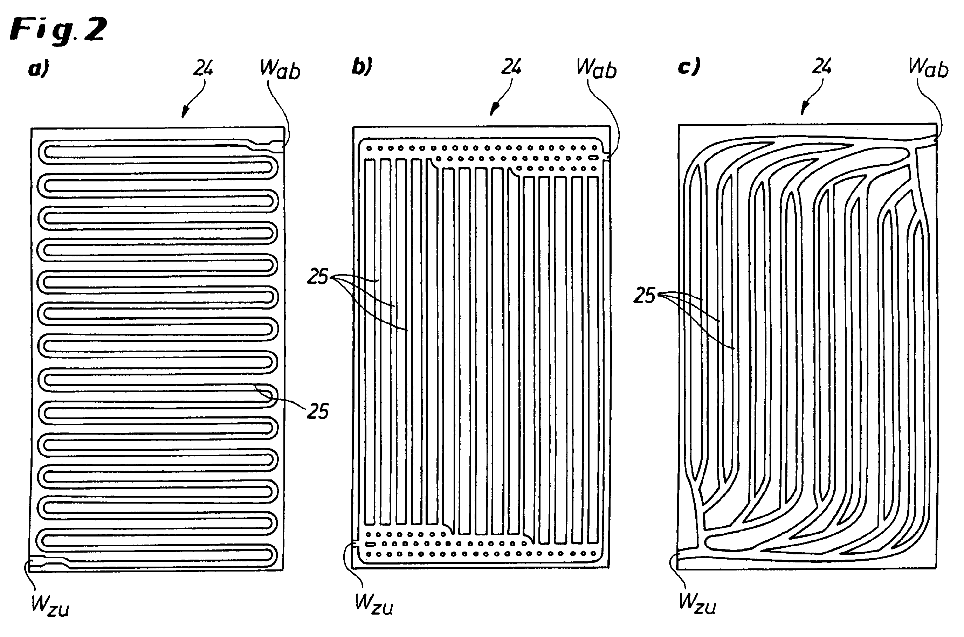

In den Figuren 1 und 2 ist zu sehen, dass der herzustellende Solarkollektor-Grundkörper 24 mit wannenartiger Grundstruktur in verschiedener Weise betreffend den Verlauf seiner Flüssigkeitskanäle 25 ausgestaltet sein kann. In den Figuren 1a, 1b und 1c ist eine Ausgestaltung zu sehen, bei der die Flüssigkeitskanäle 25 mäanderförmig (Fig. 1 a), harfenartig (Fig. 1 b) oder fraktal (Fig. 1 c) ausgebildet sind. Weiterhin sind eckseitige Wasseranschlüsse Wzu bzw. Wab vorgesehen, über die das Fluid zu- bzw. abgeführt wird. In den Figuren 1 a, 1 b und 1 c sind hierbei für den Anschluss Rundlöcher vorgesehen, während in den korrespondierenden Figuren 2a, 2b und 2c für den Anschluss Seitenschlitze vorhanden sind.

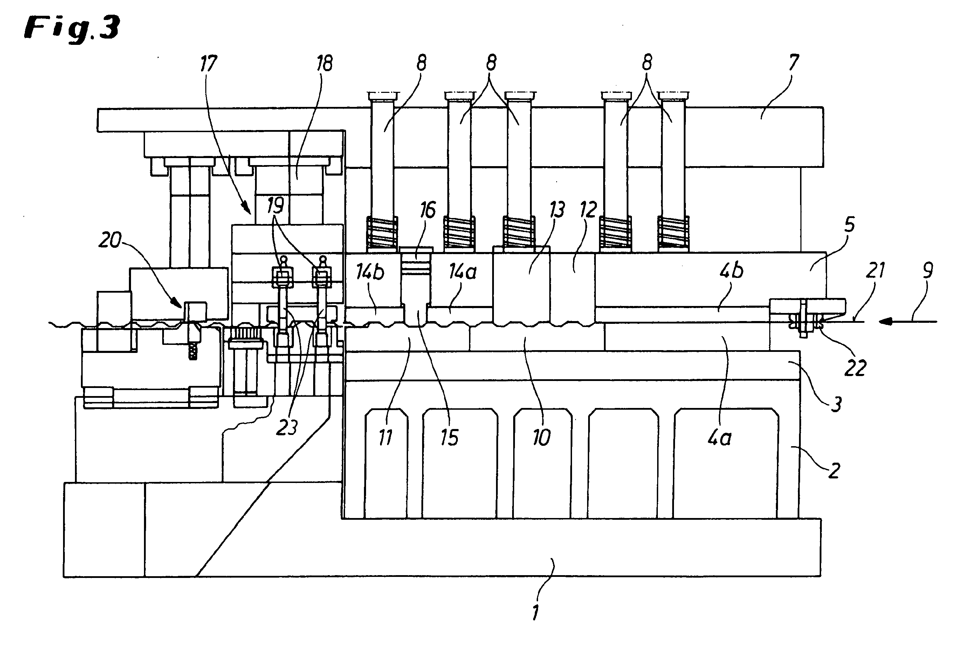

Die in einer als Gesamtheit nicht dargestellten Umformmaschine (Kniehebelpresse) zum Einsatz kommende Werkzeuganordnung ist näher in Fig. 3 gezeigt. Auf einer Grundplatte 1 ist ein Gussunterbau 2 angeordnet, dem sich nach oben hin eine Aufbauplatte 3, ein unterer Niederhalter 4a und ein oberer Niederhalter 4b, ein Niederhalterahmen 5, eine Zwischenplatte, 6 und eine Kopfplatte 7 anschließt. In den beiden Platten 6, 7 sind mehrere bis zum Niederhalterahmen 5 reichende Übertragungsbolzen 8 angeordnet. Dem unteren Niederhalter 4a schließt sich in Bandzuführrichtung gemäß Pfeil 9 gesehen und somit zum hinteren Ende hin ein Prägegesenk 10 und ein Formniederhalter 11 an, während sich dem oberen Niederhalter 4b in derselben Richtung gesehen ein erster Prägestempel 12, ein zweiter Prägestempel 13 und Formniederhalter 14a, 14b anschließen, zwischen denen ein Rückprägestempel 15 mit einem diesem zugeordneten Keilschieber 16 vorgesehen ist. Am hinteren Ende befinden sich eine Lochstation 17 mit Kammschieber 18 und Keilschiebern 19 sowie letztendlich eine Trennschere 20.

Das umzuformende Metallband 21 wird von einem Coil abgewickelt und mit einer Treibereinheit bei geöffnetem Werkzeug in Pfeilrichtung 9 von Führungsrollen 22 eingangsseitig des Werkzeugs geleitet zugeführt.

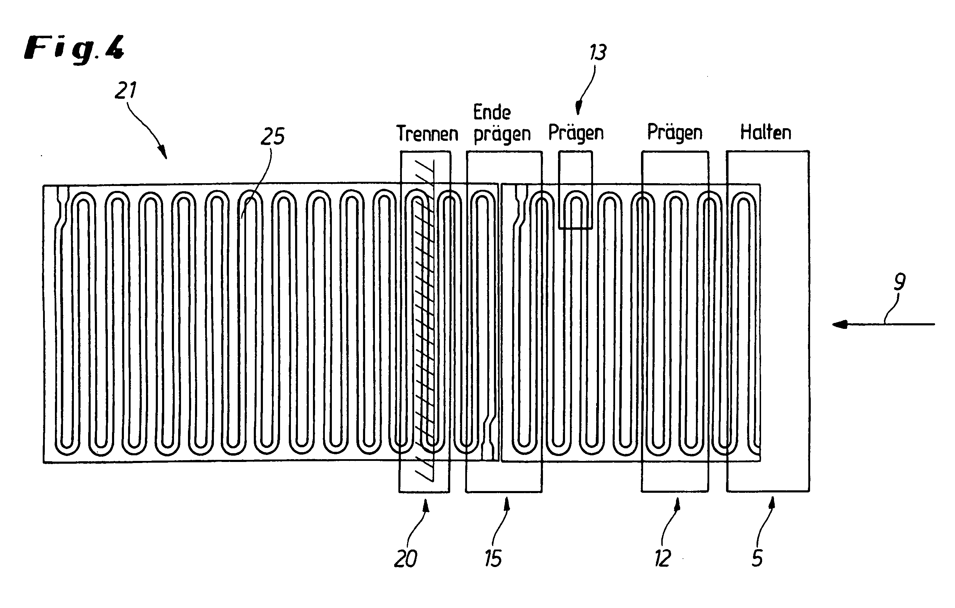

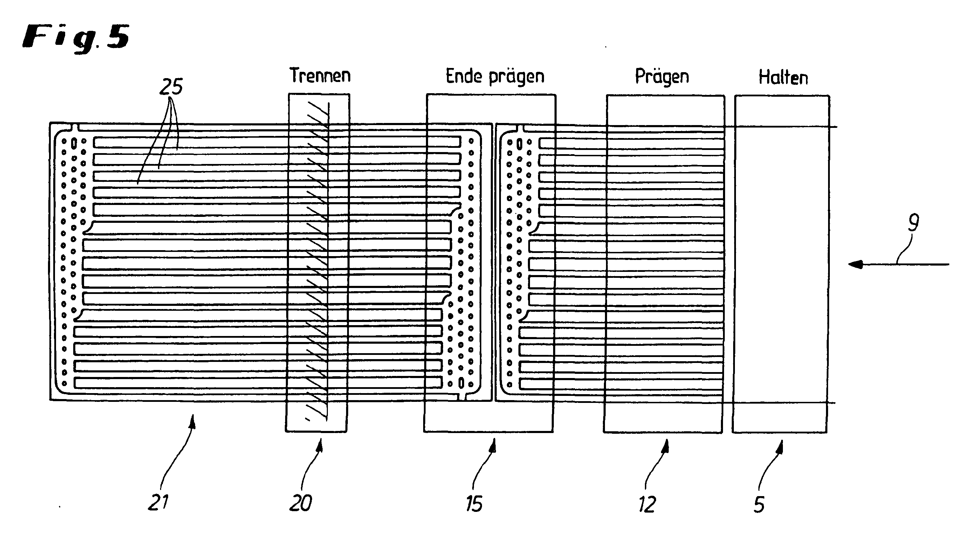

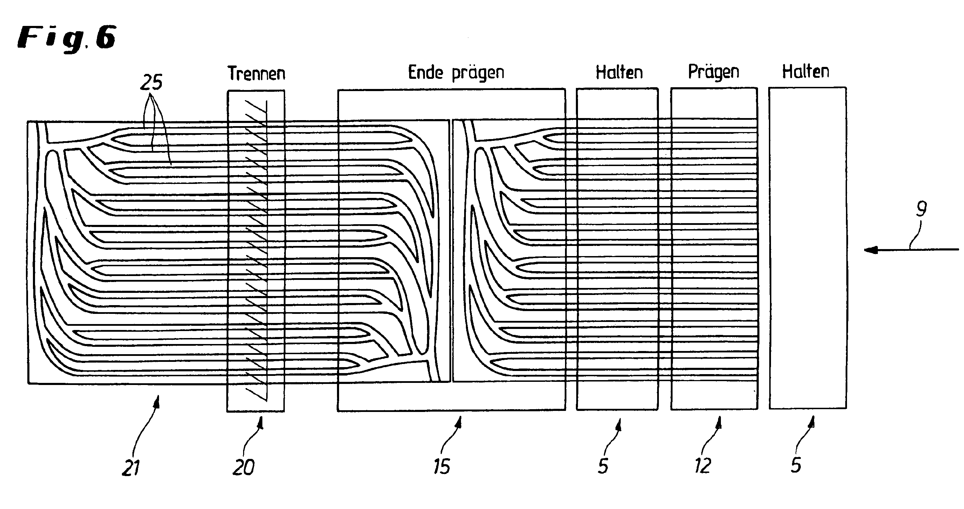

Die Figuren 4 bis 6 zeigen in schematischer Darstellung die für die Herstellung eines Solarabsorbers mit Ausbildung der Flüssigkeitskanäle 25 als Mäander (Fig. 4), als Harfe (Fig. 5) oder als Fraktal (Fig. 6) genutzten Funktionen zum Halten mit Prägen des Metallbandes, bis dieses auf Länge abgetrennt wird.

Die Wirkungen und Funktionen werden nachfolgend für die jeweiligen Ausbildungen der Flüssigkeitskanäle 25 beschrieben.

Die Herstellung eines Solarabsorber-Grundkörpers mit mäanderförmigem Verlauf des Flüssigkeitskanals 25 mit einem entsprechenden Werkzeug gemäß Fig. 4 erfolgt wie folgt:

Das vom Coil abgewickelte Metallband 21 wird durch die beiden Führungsrollen 22 der Einlaufseite in den Bereich der Niederhalterungen 4a, 4b geschoben. Hier wird das Blech flach gehalten und gebremst, um ein unkontrolliertes Einlaufen zum Prägestempel 12 bzw. 13 zu verhindern. Die Kräfte werden vom Niederhalterahmen 5 übertragen. Die Beaufschlagung des Niederhalterahmens 5 wird wahlweise durch Kunststofffedern, Gasdruckfedern oder Ziehkissen erzeugt.

Der Prägestempel 12 (s. "Prägen" rechts in Fig. 4) taucht in das Prägegesenk 10 ein und formt das Blech um. Der Niederhalterahmen 5 (s. "Halten" in Fig. 4) ist umlaufend um die Prägestempel 12, 13 angeordnet und verhindert den unkontrollierten Blecheinlauf zum Stempel hin. Die Prägung ist eine endlose Mäanderstruktur, welche vom Stempel 12 unvollständig geprägt wird, um im nächsten Schritt geschlossen zu werden.

Der Formniederhalter 14a sitzt auf dem Niederhalterahmen 5 und hält die bereits geprägte unvollständige Form fest. Das verhindert eine Verzerrung des fertig geformten Produktes. Anschließend taucht der U-Prägestempel 13 (s. "Prägen" links in Fig. 4) durch den Niederhalterahmen 5 und vervollständigt die Mäanderstruktur. Für den Fall, dass später an dieser Stelle das Ende geprägt werden soll, wird der U-Stempel per Keilschieber deaktiviert.

Der Rückprägestempel 15 (s. "Ende prägen" in Fig. 4) taucht durch den Niederhalterahmen 5 hindurch und prägt die Trennvorbereitung. Dabei werden die Enden des unvollständigen U nach außen geführt oder je nach Bauart zur Rundprägung für den verdeckten Anschluss geführt. Die Anschlussarten Rundloch (s. Fig. 1) und Seitenschlitz (s. Fig. 2) sind beide möglich.

Zum Ende der Formstufe befindet sich ein weiterer Formniederhalter 14b auf dem Niederhalterahmen 5.

Bei der Anschlussart Rundloch (s. Fig. 1) befinden sich in der Lochstation 17 vier Lochstempel 23, welche im Wechsel per Keilschieber 19 angesteuert werden, um ungelochte Vorderseiten und gelochte Rückseiten zu erzeugen. Die Aktivierung der Gesamteinheit erfolgt per Kammschieber 18 als Aufschlagwerkzeug.

Zum Abschluss wird das Produkt in der Trennschere 20 auf Länge geschnitten (s. "Trennen" in Fig. 4). Die Aktivierung der Gesamteinheit erfolgt per Kammschieber als Aufschlagwerkzeug. Je nach Produktionslage der Halbschale wird auch das Scherenunterteil per Mehrfachkeilschieber auf Schnitthöhe angehoben.

Die Entnahme des fertigen schalenartigen Solarabsorbers kann durch ein Förderband in Vorschubrichtung erfolgen.

Wie in Fig. 4 gesehen werden kann, ist hier ein Endprägen vorgesehen, bei dem die beiden seitlichen Anschlussschlitze für die Wasserzu- und -abfuhr an derselben Seite des Kollektor-Grundkörpers angeordnet sind. Die Anschlüsse sind also einseitig angeordnet. In einer alternativen Ausgestaltung können die Anschlüsse im Grundkörper auch diagonal vorgesehen werden, d. h. die seitlichen Anschlussschlitze liegen im Grundkörper diagonal zueinander. In diesem Falle wird ein Endpräge-Werkzeugteil in die Presse montiert, das entsprechend ausgebildet ist.

Die Herstellung eines Solarabsorber-Grundkörpers mit harfenförmigem Verlauf der Flüssigkeitskanäle 25 mit einem entsprechenden Werkzeug gemäß Fig. 5 erfolgt wie folgt:

Das vom Coil abgewickelte Metallband 21 wird durch die beiden Führungsrollen 22 der Einlaufseite in den Bereich der Niederhalterungen 4a, 4b geschoben. Hier wird das Blech flach gehalten und gebremst, um ein unkontrolliertes Einlaufen zum Prägestempel 12 zu verhindern. Die Kräfte werden vom Niederhalterahmen 5 übertragen. Die Beaufschlagung des Niederhalterahmens 5 wird wahlweise durch Kunststofffedern, Gasdruckfedern oder Ziehkissen erzeugt.

Der Prägestempel 12 (s. "Prägen" in Fig. 5) taucht in das Prägegesenk 10 ein und formt das Blech um. Der Vorschub ist kleiner als die Stempelbreite, um eine weiterführende Prägung mit Überlappung zu ermöglichen. Der Niederhalterahmen 5 (s. "Halten" in Fig. 5) ist umlaufend um den Prägestempel 12 angeordnet und verhindert den unkontrollierten Blecheinlauf zum Stempel hin. Für den Fall, dass eine Endposition unter den Stempel getaktet wird, kann dieser durch Kammschieber deaktiviert werden, um in der späteren Endprägung in ein glattes Blech zu formen. Der Vorschub taktet dabei immer weiter, jedoch prägt der Stempel nicht.

Der Formniederhalter 14a sitzt auf dem Niederhalterahmen 5 und hält die bereits geprägte unvollständige Form fest. Das verhindert eine Verzerrung des fertig geformten Produktes.

Der Rückprägestempel 15 (s. "Ende prägen" in Fig. 5) formt die Trennvorbereitung, wobei zwei Kopfenden in das zuvor nicht geprägte Blech geprägt werden. Die Kanalübergänge werden schleichend ausgeleitet. Die Anschlussarten Rundloch (s. Fig. 1) und Seitenschlitz (s. Fig. 2) sind beide möglich.

Bei der Anschlussart Rundloch (s. Fig. 1) befinden sich in der Lochstation 17 vier Lochstempel 23, welche im Wechsel per Keilschieber 19 angesteuert werden, um ungelochte Vorderseiten und gelochte Rückseiten zu erzeugen. Die Aktivierung der Gesamteinheit erfolgt per Kammschieber 18 als Aufschlagwerkzeug.

Zum Abschluss wird das Produkt in der Trennschere 20 auf Länge geschnitten (s. "Trennen" in Fig. 5). Die Aktivierung der Gesamteinheit erfolgt per Kammschieber als Aufschlagwerkzeug. Je nach Produktionslage der Halbschale wird auch das Scherenunterteil per Mehrfachkeilschieber auf Schnitthöhe angehoben.

Die Entnahme des fertigen schalenartigen Solarabsorbers kann durch ein Förderband in Vorschubrichtung erfolgen.

Die Herstellung eines Solarabsorber-Grundkörpers mit fraktalem Verlauf der Flüssigkeitskanäle 25 mit einem entsprechenden Werkzeug gemäß Fig. 6 erfolgt wie folgt (dargestellt ist die Fertigung eines Kollektor-Grundkörpers gemäß Fig. 2c):

Das vom Coil abgewickelte Metallband 21 wird durch die beiden Führungsrollen 22 der Einlaufseite in den Bereich der Niederhalterungen 4a, 4b geschoben. Hier wird das Blech flach gehalten und gebremst, um ein unkontrolliertes Einlaufen zum Prägestempel 12 zu verhindern. Die Kräfte werden vom Niederhalterahmen 5 übertragen. Die Beaufschlagung des Niederhalterahmens 5 wird wahlweise durch Kunststofffedern, Gasdruckfedern oder Ziehkissen erzeugt.

Der Prägestempel 12 (s. "Prägen" in Fig. 6) taucht in das Prägegesenk 10 ein und formt das Blech um. Der Vorschub ist kleiner als die Stempelbreite, um eine weiterführende Prägung mit Überlappung zu ermöglichen. Der Niederhalterahmen 5 (s. "Halten" in Fig. 6) ist umlaufend um den Prägestempel 12 angeordnet und verhindert den unkontrollierten Blecheinlauf zum Stempel hin. Für den Fall, dass eine Endposition unter den Stempel getaktet wird, kann dieser durch Kammschieber deaktiviert werden, um in der späteren Endprägung in ein glattes Blech zu formen. Der Vorschub taktet dabei immer weiter, jedoch prägt der Stempel nicht.

Der Formniederhalter 14a sitzt auf dem Niederhalterahmen 5 und hält die bereits geprägte Form fest. Das verhindert eine Verbiegung des fertig geformten Produktes.

Der Rückprägestempel 15 (s. "Ende prägen" in Fig. 6) formt die Trennvorbereitung, wobei zwei Kopfenden in das zuvor nicht geprägte Blech geprägt werden. Hier ist beim Produktdesign darauf zu achten, dass die beiden Kopfenden nicht zu breite werden, um eine Überschreitung der Presskraft zu vermeiden. Die Kanalübergänge werden schleichend ausgeleitet. Die Anschlussarten Rundloch (s. Fig. 1) und Seitenschlitz (s. Fig. 2) sind beide möglich.

Bei der Anschlussart Rundloch (s. Fig. 1) befinden sich in der Lochstation 17 vier Lochstempel 23, welche im Wechsel per Keilschieber 19 angesteuert werden, um ungelochte Vorderseiten und gelochte Rückseiten zu erzeugen. Die Aktivierung der Gesamteinheit erfolgt per Kammschieber 18 als Aufschlagwerkzeug.

Zum Abschluss wird das Produkt in der Trennschere 20 auf Länge geschnitten (s. "Trennen" in Fig. 6). Die Aktivierung der Gesamteinheit erfolgt per Kammschieber als Aufschlagwerkzeug. Je nach Produktionslage der Halbschale wird auch das Scherenunterteil per Mehrfachkeilschieber auf Schnitthöhe angehoben.

Die Entnahme des fertigen schalenartigen Solarabsorbers kann durch ein Förderband in Vorschubrichtung erfolgen.

### Bezugszeichenliste:

- 1: Grundplatte
- 2: Gussunterbau
- 3: Aufbauplatte
- 4a: unterer Niederhalter
- 4b: oberer Niederhalter
- 5: Niederhalterahmen
- 6: Zwischenplatte
- 7: Kopfplatte
- 8: Übertragungsbolzen
- 9: Zuführrichtung / Bandzuführrichtung
- 10: Prägegesenk
- 11: Formniederhalter
- 12: erstes Werkzeugteil / erster Prägestempel
- 13: zweites Werkzeugteil / zweiter Prägestempel
- 14a: Formniederhalter
- 14b: Formniederhalter
- 15: drittes Werkzeugteil / Rückprägestempel
- 16: Keilschieber
- 17: Lochstation
- 18: Kammschieber
- 19: Keilschieber
- 20: Trennschere
- 21: umzuformendes Metallband / bandförmiges Ausgangsmaterial
- 22: Führungsrolle

- 23: Lochstempel
- 24: Solarkollektor-Grundkörper
- 25: Flüssigkeitskanal
- Wzu: Wasseranschluss Zufuhr
- Wab: Wasseranschluss Abfuhr

## Patentansprüche

1. Verfahren zur Herstellung von Solarkollektoren
, wobei der Solarkollektor einen aus einem Metallband (21) als Halbschale plattenartig ausgebildeten Grundkörper (24) umfasst, in den mindestens ein Flüssigkeitskanal (25) für ein Fluid eingebracht ist, durch den von der Sonne aufzuheizendes Fluid geführt werden kann,
**dadurch gekennzeichnet, dass**
der Grundkörper (24) samt dem mindestens einen Flüssigkeitskanal (25) durch die Schritte hergestellt wird:
a) Zuführen des Metallbandes (21) in den Werkzeugbereich einer Presse, insbesondere Kniehebepresse ;
b) Durchführen eines Umformprozesses mit dem Metallband (21), bei dem durch einen Press-, Präge- und/oder Tiefziehvorgang zumindest ein Teil des Flüssigkeitskanals (25) in das Metallband (21) eingeformt wird wobei
das Metallband (21) während der Durchführung des Press-, Präge- und/oder Tiefziehvorgangs zwischen mindestens zwei Werkzeugteilen (4a, 4b) an mindestens zwei voneinander beabstandete Stellen kraft- und/oder formschlüssig fixiert oder gehalten wird, wobei
das Fixieren oder Halten in einem in Zuführrichtung (9) des Metallbandes (21) vorneliegenden Bereich während der Durchführung des Press-, Präge- und/oder Tiefziehvorgangs formschlüssig erfolgt, indem ein Fixier- oder Haltebereich in den bereits gepressten, geprägten bzw. tiefgezogenen Abschnitt des Flüssigkeitskanals (25) eingreift.

2. Verfahren nach Anspruch 1, **dadurch gekennzeichnet, dass** die Umformmaschine mindestens ein erstes Werkzeugteil (12) und mindestens ein zweites Werkzeugsteil (13) aufweist, wobei jedes Werkzeugteil (12, 13) betätigt wird, um in separaten Teil-Umformprozessen jeweils einen Teil des Flüssigkeitskanals (25) herzustellen, und wobei die Teile des Flüssigkeitskanals (25) sich komplementär ergänzen.

3. Verfahren nach Anspruch 2, **dadurch gekennzeichnet, dass** das erste Werkzeugteil (12) einen Teil eines noch nicht kompletten mäanderförmigen Abschnitts des Flüssigkeitskanals (25) herstellt und dass das zweite Werkzeugteil (13) diesen mäanderförmigen Abschnitt komplettiert.

4. Verfahren nach einem der Ansprüche 1 oder 2, **dadurch gekennzeichnet, dass** die Umformmaschine mindestens ein erstes Werkzeugteil (12) aufweist, wobei das Werkzeugteil (12) betätigt wird, um in separaten Teil-Umformprozessen jeweils einen Teil des mindestens einen Flüssigkeitskanals (25) herzustellen.

5. Verfahren nach Anspruch 4, **dadurch gekennzeichnet, dass** die Einformung von sich in Zuführrichtung (9) anschließenden Abschnitten des mindestens einen Flüssigkeitskanals (25) durch Wiederholung des Betätigens des ersten Werkzeugteils (12) erfolgt, wobei zwischen zwei Betätigungen das bandförmige Ausgangsmaterial (21) in Zuführrichtung (9) um einen definierten Weg verschoben wird.

6. Verfahren nach Anspruch 5, **dadurch gekennzeichnet, dass** der Verschiebeweg des bandförmigen Ausgangsmaterials (21) geringer ist als die Breite des ersten Werkzeugteils (12) in Zuführrichtung (9) gemessen, um bei der Ausbildung des Flüssigkeitskanals (25) sich vom Werkzeugteil (12) überlappende Bereiche zu schaffen.

7. Verfahren nach einem der Ansprüche 2 bis 6, **dadurch gekennzeichnet, dass** die Umformmaschine mindestens ein drittes Werkzeugteil (15) aufweist, wobei dieses dritte Werkzeugteil (15) betätigt wird, um in einem weiteren separaten Teil-Umformprozess mindestens einen Anschlussabschnitt an den mindestens einen noch nicht kompletten Flüssigkeitskanal (25) anzuformen.

8. Verfahren nach einem der Ansprüche 1 bis 7, **dadurch gekennzeichnet, dass** nach der Einbringung des gesamten Flüssigkeitskanals (25) das bandförmige Ausgangsmaterial (21) mittels einer Trennschere (20) auf eine definierte Länge abgelängt wird.

## Claims

1. A method for manufacturing solar collectors, wherein the solar collector comprises a plate-like base body (24) in the form of a half-shell that is formed of a metal strip (21) and in which at least one fluid channel (25) for a fluid is produced, wherein fluid to be heated by the sun can be conveyed through said fluid channel,
**characterized in that**
the base body (24) containing the at least one fluid channel (25) is manufactured by means of the following steps:
a) feeding the metal strip (21) into the tool area of a press, particularly a toggle press;
b) subjecting the metal strip (21) to a deformation process, in which at least a portion of the fluid channel (25) is formed in the metal strip (21) by means of a pressing, stamping and/or deep-drawing process, wherein
the metal strip (21) is at least at two spaced-apart locations non-positively and/or positively fixed or held between at least two tool parts (4a, 4b) while the pressing, stamping and/or deep-drawing process is carried out, and wherein
the metal strip (21) is positively fixed or held in its front region referred to the feed direction (9) while the pressing, stamping and/or deep-drawing process is carried out **in that** a fixing or holding region engages into the already pressed, stamped or deep-drawn section of the fluid channel (25).

2. The method according to Claim 1, **characterized in that** the deformation machine features at least one first tool part (12) and at least one second tool part (13), wherein each tool part (12, 13) is actuated in order to respectively produce a portion of the fluid channel (25) in separate deformation sub-processes, and wherein the portions of the fluid channel (25) are produced in a complementary fashion.

3. The method according to Claim 2, **characterized in that** the first tool part (12) produces a portion of a not yet complete meander-shaped section of the fluid channel (25), and **in that** the second tool part (13) completes this meander-shaped section.

4. The method according to one of Claims 1 or 2, **characterized in that** the deformation machine features at least one first tool part (12), wherein the tool part (12) is actuated in order to respectively produce a portion of the at least one fluid channel (25) in separate deformation sub-processes.

5. The method according to Claim 4, **characterized in that** the following sections of the at least one fluid channel (25) referred to the feed direction (9) are produced by repeating the actuation of the first tool part (12), wherein the strip-shaped starting material (21) is displaced by a defined distance in the feed direction (9) between two actuations.

6. The method according to Claim 5, **characterized in that** the strip-shaped starting material (21) is displaced by a distance that is smaller than the width of the first tool part (12) measured in the feed direction (9) in order to create regions that are overlapped by the tool part (12) during the formation of the fluid channel (25).

7. The method according to one of Claims 2 to 6, **characterized in that** the deformation machine features at least one third tool part (15), wherein this third tool part (15) is actuated in order to form at least one connecting section onto the at least one not yet complete fluid channel (25) in another separate deformation sub-process.

8. The method according to one of Claims 1 to 7, **characterized in that** the strip-shaped starting material (21) is cut to a defined length by means of separating shears (20) after producing the complete fluid channel (25) therein.

## Revendications

1. Procédé destiné à la fabrication de capteurs solaires, le capteur solaire comprenant un corps de base (24) constitué en forme de plaque en tant que demi-enveloppe à partir d'un feuillard métallique (21), dans lequel au moins un conduit de liquide (25) est introduit pour un fluide à travers lequel peut être guidé le fluide à chauffer par le soleil,
**caractérisée en ce que**
le corps de base (24) avec le au moins un conduit de liquide (25) est fabriqué par les étapes :
a) d'introduction du feuillard métallique (21) dans la zone d'outil d'une presse, en particulier d'une presse à genouillère ;
b) d'exécution d'un processus de formage avec le feuillard métallique (21), lors de laquelle au moins une partie du conduit de liquide (25) est mise en forme dans le feuillard métallique (21) par un procédé de compression, d'estampage et/ou d'emboutissage profond pour lequel
le feuillard métallique (21) est fixé ou maintenu pendant l'exécution du procédé de compression, d'estampage et/ou d'emboutissage profond, entre au moins deux parties d'outil (4a, 4b) à au moins deux endroits distants l'un de l'autre, par complémentarité de force et/ou de forme, pour lequel
la fixation ou le maintien dans une zone située à l'avant dans le sens d'introduction (9) du feuillard métallique (21) pendant l'exécution du procédé de compression, d'estampage et/ou d'emboutissage profond, a lieu par complémentarité de forme, une zone de fixation ou de maintien venant en prise dans la section pressée, estampée ou emboutie profond du conduit de liquide (25).

2. Procédé selon la revendication 1, **caractérisé en ce que** la machine de formage présente au moins une première partie d'outil (12) et au moins une deuxième partie d'outil (13), pour lequel chaque partie d'outil (12, 13) est actionnée, pour fabriquer à chaque fois une pièce de conduit de liquide (25) dans des processus de formage de pièce séparés et pour lequel les parties du conduit de liquide (25) se complètent de façon complémentaire.

3. Procédé selon la revendication 2, **caractérisé en ce que** la première partie d'outil (12) fabrique une partie d'une section méandreuse encore incomplète du conduit de liquide (25) et **en ce que** la deuxième partie d'outil (13) complète cette section méandreuse.

4. Procédé selon une quelconque des revendications 1 ou 2, **caractérisé en ce que** la machine de formage présente au moins une première partie d'outil (12), pour lequel la partie d'outil (12) est actionnée pour fabriquer à chaque fois une partie d'au moins un conduit de liquide (25) dans des processus de formage séparés.

5. Procédé selon la revendication 4, **caractérisé en ce que** la mise en forme des sections se raccordant dans le sens d'introduction (9) du au moins un conduit de liquide (25) a lieu par répétition de l'actionnement de la première partie d'outil (12), pour lequel entre deux actionnements, le matériau initial (21) en forme de feuillard est déplacé d'une distance définie dans le sens d'introduction (9).

6. Procédé selon la revendication 5, **caractérisé en ce que** la course de déplacement du matériau initial (21) en forme de feuillard est inférieure à la largeur de la première partie d'outil (12) mesurée dans le sens d'introduction (9) pour créer lors de la constitution du conduit de liquide (25) des zones se chevauchant depuis la partie d'outil (12).

7. Procédé selon une quelconque des revendications 2 à 6, **caractérisé en ce que** la machine de formage présente au moins une troisième partie d'outil (15), pour lequel cette troisième partie d'outil (15) est actionnée pour mettre en forme au moins une section de raccord sur le au moins un conduit de liquide (25) pas encore complet dans un processus de formage de pièce séparé.

8. Procédé selon une quelconque des revendications 1 à 7, **caractérisé en ce que** le matériau initial (21) en forme de feuillard est coupé à une longueur définie au moyen d'une cisaille à tronçonner (20) après insertion de tout le conduit de liquide (25).
